# EUROPÄISCHE PATENTSCHRIFT

(11) **EP 1 133 341 B1**
(45) Veröffentlichungstag und Bekanntmachung des Hinweises auf die Patenterteilung: **17.03.2004**
(21) Anmeldenummer: 99952588.4
(22) Anmeldetag: 15.10.1999
(51) Int. Cl.: B01D 27/06, B01D 29/11

(54) **FILTERPATRONE**
FILTER CARTRIDGE
CARTOUCHE FILTRANTE

(30) Priorität: 17.10.1998 DE 19847998
(43) Veröffentlichungstag der Anmeldung: 19.09.2001
(73) Patentinhaber: Mann + Hummel GmbH, 71638 Ludwigsburg (DE)
(72) Erfinder: EYSSEL, Marcus, D-71364 Winnenden (DE); HUBER, Matthäus, D-94419 Reisbach (DE); SANGUINETTE, Jochen, Singapore 259796 (SG); TUMBRINK, Manfred, D-74246 Eberstadt (DE); WAGNER, Manfred, D-70597 Stuttgart (DE)
(74) Vertreter: Voth, Gerhard, Dipl.-Ing.
(86) Internationale Anmeldenummer: PCT/EP1999/007829
(87) Internationale Veröffentlichungsnummer: WO 2000/023166

(56) Entgegenhaltungen:
- EP-A- 0 498 757
- EP-A- 0 713 721
- DE-A- 4 206 519
- DE-A- 4 428 139
- GB-A- 2 134 811
- US-A- 4 956 089

## Beschreibung

Die Erfindung betrifft ein Verfahren zur Herstellung von Filterpatronen mit in eine Folienendscheibe eingebrachten Einlegeteilen.

Filterpatronen mit Folienendscheiben als Abschluß sind z. B. aus der DE-A-44 28 139 bekannt. Die Endscheiben an den Stirnseiten der Filterpatrone sind elastisch ausgeführt und bestehen aus Folien, die zur Verbindung mit dem Filtermedium erwärmt werden. Durch die Erwärmung dehnen sich die Folien zum Filtermittel hin aus, wodurch dieses durch die Folien teilweise durchdrungen wird und somit eine Abdichtung der stimseitigen Filterfalten entsteht. Durch die Erwärmung härtet das Folienmaterial gleichzeitig aus, wodurch eine feste Verbindung durch Verkleben mit dem Filtermaterial zustande kommt. Nach dem Aushärtungsprozeß hat die Folie eine Restelastizität, die z. B. genutzt werden kann, um ein dichtendes Anliegen der Endscheiben an entsprechenden Dichtflächen im zugehörigen Gehäuse zu erzielen.

Zur Versteifung der an den Folienendscheiben vorgesehenen Dichtflächen wird gemäß der DE-A-44 28 139 vorgeschlagen, einen flexiblen Stützring in die elastisch ausgebildete Stimendscheibe einzubetten. Dieser kann in die Form gelegt werden, welche zur Aufnahme der zur Aushärtung bestimmten Folienendscheiben gedacht ist. Bei der Fertigung einer solchen Filterpatrone treten Toleranzen zwischen dem Stützring und der Folienendscheibe auf, die hingenommen werden, weil der Stützring nicht mit den Funktionsflächen zur Dichtung im Gehäuse zusammenwirkt. Hierfür sind entsprechende Flächen an der Folienendscheibe vorgesehen, deren genaue Lage durch die Ränder der Form bestimmt werden, in die die Folienscheibe zur Aushärtung eingebracht wird. Die Stützwirkung kann der Stützring unabhängig von seiner genauen Lage in der Folienendscheibe entfalten.

Will man nun Bauteile wie z. B. Dichtungen in die Filterpatrone integrieren, welche mit Funktionsflächen am Gehäuse korrespondieren und daher eine hohe Maßgenauigkeit aufweisen müssen, kann z. B. eine Lösung verfolgt werden, wie sie in der DE-A-42 25 144 dargestellt ist. Das hier z. B. zum Einsatz kommende ringförmige Dichtelement wird nach Fertigung einer runden Filterpatrone auf die Folienendscheibe aufgebracht. Dies kann z. B. durch Aufschmelzen des Dichtringes geschehen. Hierzu ist allerdings ein weiterer Verfahrensschritt notwendig, der sich an den Aushärtungsprozeß der Folienendscheiben anschließt, was das gefertigte Bauteil verteuert. Eine andere Möglichkeit wird in der US-A-5 211 846 vorgeschlagen. Der Dichtring ist in eine Endkappe eingebracht, welche auf die elastischen Endscheiben, die insbesondere aus Polyurethanschaum bestehen, aufgesetzt wird. Dies kann z. B. während der Montage der Filterpatrone erfolgen. Allerdings ist zur Erzeugung einer Dichtung in diesem Fall ein zusätzliches Bauteil notwendig, wodurch diese Lösung einen zusätzlichen Kostenaufwand darstellt.

Die US-A-4 956 089 offenbart ein Herstellungsverfahren für Filterpatronen. Bei diesem Herstellungsverfahren wird eine Endscheibe aus thermoplastischem Material in eine Aufnahme eingelegt und das Filtermedium mit seinem Stützgitter auf die Endscheibe aufgesetzt. Durch Erhitzen der Endscheibe wird der thermoplastische Kunststoff weich, so dass das Filtermedium und das Stützgitter in den plastifizierten Werkstoff einsinken und nach dem Erkalten des Materials eine dichtende Verbindung eingehen.

Das Dokument GB-A-2 134 811 beschreibt ein Verfahren zur Herstellung von Filterpatronen, bei dem die Endscheibe durch Gießen und Aushärten in einer Form gebildet wird. In die Endscheibe ist ein Filtermedium und ein Stützgitter dichtend eingebettet.

Das Dokument EP-A-0498 757 offenbart ein Verfahren zur Herstellung eines Ringfilters aus sternförmig gefaltetem Filterbahnmaterial. Das Filterbahnmaterial wird mit seinen Stirnkanten auf eine Grundplatte aufgesetzt. Anschließend wird eine fließfähige Vergußmasse auf die Grundplatte aufgebracht, wodurch die Vergußmasse in die radialen Faltenräume des Filterbahnmaterials eindringen und so eine dichtende Verbindung zwischen dem Filterbahnmaterial und der durch die Vergußmasse gebildete Endscheibe bildet.

Es ist daher Aufgabe der Erfindung, eine Filterpatrone mit Folienendscheiben zu schaffen, die mindestens ein weiteres Bauteil zur Beeinflussung der Funktion enthält, wobei der Aufwand für die Fertigung der Filterpatrone nicht wesentlich steigt.

Diese Aufgabe wird durch die Merkmale des Patentanspruches 1 gelöst, der ein Verfahren zur positionsgenauen Fixierung von Einlegeteilen in Folienendscheiben einer Filterpatrone zum Inhalt hat.

Vorteilhafte Weiterbildungen sind in den abhängigen Ansprüchen 2 bis 7 beansprucht.

Das erfindungsgemäße Verfahren sieht vor, daß die Form, welche die Folienrohlinge zur Erzeugung der Folienendscheiben einer Filterpatrone aufnimmt, zusätzlich Aufnahmen zur Fixierung von Einlegeteilen aufweist. Mit Hilfe dieser Form sind Filterpatronen zur Gasfilterung oder Flüssigkeitsfilterung herzustellen. Hierzu wird ein Folienrohling, der den Rohling für die herzustellende Folienendscheibe der Filterpatrone bildet, in bekannter Weise in die Form eingelegt. Zusätzlich zu der Stirnseite des zum Beispiel zylindrischen Filtermediums wird vor der Erwärmung des Folienrohlings auch das Einlegeteil in der Aufnahme fixiert. Dieser Verfahrensschritt kann leicht in den Herstellungsprozeß für die Filterpatrone integriert werden. Das Vorsehen einer Aufnahme in der Form ermöglicht eine Automatisierung dieses Prozesses, wobei die Filterpatrone in einem Prozeßschritt durch Erwärmung und Aushärtung der Folienrohlinge erfolgen kann. Die Fixierung des Einlegeteils in der Aufnahme erfolgt derart, daß die fertige Filterpatrone ohne großen Kraftaufwand der Form entnommen werden kann. Die Bildung der Verbindung zwischen Folienendscheibe und dem Einlegeteil erfolgt genauso wie bei dem Filtermedium durch Einbettung in das sich ausdehnende Material des Folienrohlings. Das Einlegeteil muß in einem Bereich der Folienendscheibe eingebettet werden, der nicht zur Einbettung des Filtermediums vorgesehen ist. Dies kann in axialen sowie radialen Flächenabschnitten der Folienendscheiben erfolgen. Nur so kann gewährleistet werden, daß die Stirnseite des Filtermediums vollständig von der Folienendscheibe eingeschlossen wird, was für die Dichtheit der Filterpatrone unbedingt notwendig ist.

Gemäß einer zweckmäßigen Ausbildung des Erfindungsgedankens reicht nur der Teil des Einlegeteils in die Form hinein, der mit der sich bildenden Folienendscheibe verbunden werden soll. Der Teil des Einlegeteils, welcher aus der Form herausragt, ist insbesondere zur Erreichung der mit dem Bauteil verfolgten Funktion gedacht. Die Folienendscheibe dehnt sich nur innerhalb der Formwände bzw. in Richtung des Filtermediums aus, so daß die außerhalb der Form liegenden Teile des Einlegeteils nicht durch das Material der Folienendscheibe verklebt werden.

Gemäß einer Modifikation der Erfindung wird das Einsetzen des Filtermediums in die Form zur Herstellung einer Verbindung zwischen Filtermedium und Folienrohling durch eine Einsetzhilfe erleichtert. Diese kann durch einen konischen Bereich gebildet sein, die mit der Innenkante der Stirnseite des zylindrischen Filtermediums zusammenwirkt. Die konische Einsetzhilfe endet am Innenrand des Folienrohlings, so daß das Filtermedium zuverlässig auf dem Folienrohling plaziert werden kann. Diese Maßnahme bietet vor allen Dingen Vorteile bei einer automatisierten Massenfertigung. Aber auch das Einsetzen des Filtermediums per Hand wird auf diese Weise erleichtert.

Eine gemäß Anspruch 4 hergestellte Filterpatrone weist als Einlegeteil einen Zusatzfilter auf. Dieser besteht insbesondere aus einem Drahtnetz, wobei auch der Einsatz eines beliebigen anderen im wesentlichen flächig ausgeführten Filtermediums, wie z. B. Papier zur Anwendung kommen kann. Die Ränder des Zusatzfilters sind in die Folienendscheibe eingebettet, wodurch eine Dichtung gewährleistet ist. In Abhängigkeit von der Durchflußrichtung des Fluids durch die Patrone kann das Zusatzfilter als Sicherheitselement auf der Reinseite des Filters im Falle eines Versagens des Filtermediums dienen.

Eine alternative Lösung sieht vor, in der Folienendscheibe der Filterpatrone Mittel zur Vereinfachung ihrer Handhabung einzubetten. Dies kann z. B. eine Zentrierhilfe zur Erleichterung der Montage der Filterpatrone im zugehörigen Gehäuse sein. Andere denkbare Bauteile sind Griffe, die einen Wechsel der Filterpatrone erleichtern oder auch Reduzierstücke.

Eine andere Alternative für die Ausgestaltung der Filterpatrone ergibt sich, wenn die Folienendscheibe aus zwei aufeinanderliegenden Folienrohlingen aufgebaut wird. Das Einlegeteil kann dann zwischen diesen Folienrohlingen eingebettet werden. Auf diese Weise entsteht eine Filterpatrone erhöhter Stabilität. Weiterhin ist gewährleistet, daß das Einlegeteil in einem Bereich eingebettet wird, der für die Dichtung zwischen Filtermedium und Folienendscheibe nicht notwendig ist. Als mögliches Einlegeteil sind Dichtringe zu nennen, die eine Dichtfläche zur radialen Dichtung auf einem Rohransatz bilden, auf den die Filterpatrone zur Montage im Filtergehäuse aufgeschoben werden kann.

Diese und weitere Merkmale von bevorzugten Weiterbildungen der Erfindung gehen außer aus den Ansprüchen auch aus der Beschreibung und den Zeichnungen hervor.

Weitere Einzelheiten der Erfindung werden in den Zeichnungen anhand von schematischen Ausführungsbeispielen beschrieben. Hierbei zeigen
- Figur 1: die in eine Form eingebrachte Stirnseite einer Filterpatrone mit zwei Ringscheiben als Rohling für die Folienendscheibe vor und nach dem Fertigungsprozeß für die Folienendscheibe im Mittelschnitt,
- Figur 2: den Schnitt durch eine Filterpatrone mit Folienendscheiben, wobei auf der einen Seite ein Drahtgitter als Zusatzfilter und auf der anderen Seite ein Deckel mit einer Mittelbohrung zur Aufnahme eines Bajonettverschlusses in die Folienendscheiben eingebracht sind und
- Figur 3: die Stirnseite des Filterelements gemäß Figur 2 mit Deckel, wie dieses in die Form eingebracht ist, wobei nur ein dem Detail X in Figur 1 entsprechender Ausschnitt dargestellt ist.

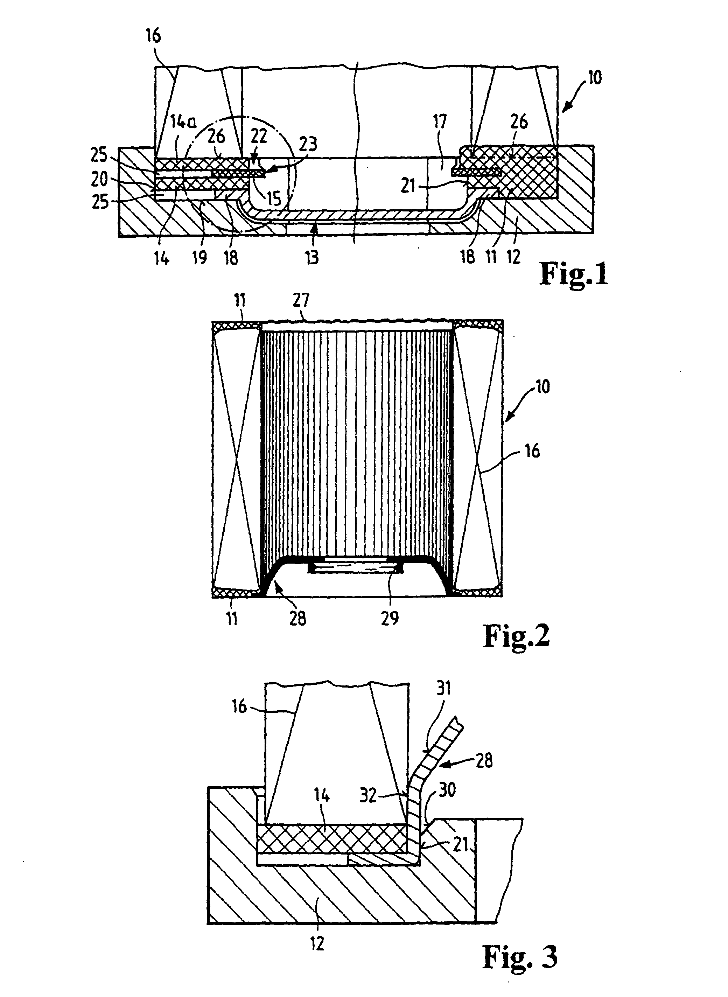

Aus Figur 1 läßt sich der Fertigungsprozeß für Filterpatronen 10 mit Folienendscheibe 11 in einer Form 12 ersehen. In die Form werden nacheinander ein als Griffbügel 13 ausgebildetes Einlegeteil, ein Folienrohling 14, ein Dichtring 15 und ein weiterer Folienrohling 14a eingelegt. Anschließend wird ein als sternförmig gefaltetes Filterpapier ausgebildetes Filtermedium 16 auf den obersten Folienrohling 14a aufgesetzt. Die Form ist derart gestaltet, daß das Einsetzen der einzelnen Teile positionsgenau möglich ist. Für den Griffbügel 13 ist in der Form ein Längsschlitz 17 vorgesehen. In diesen fällt der Griffbügel hinein, wobei Bügelenden 18 des Griffbügels 13 auf einem Formboden 19 der Form plaziert werden. (Der Längsschlitz ermöglicht gleichzeitig ein Ausheben der fertigen Filterpatrone 10 aus der Form). Anschließend wird ein erster Folienrohling 14 eingesetzt, der eine Zentrierung erfährt durch eine äußere Ringwand 20 und eine innere Ringwand 21 der Form 12. Die innere Ringwand 21 besitzt einen Absatz 22 mit einer Ringnut 23, die zur Aufnahme des Dichtrings 15 geeignet ist, der auf diese Weise genau positioniert werden kann. Nach dem Dichtring 15 wird ein weiterer Folienrohling 14a in die Form 12 eingesetzt, der durch die äußere Ringwand 20 zentriert wird. Nach Aufsetzen des Filtermediums 16 wird der entstandene Bauteilverband erwärmt. Das Folienmaterial dehnt sich dabei aus und füllt im Bauteilverband entstandene Hohlräume 25 aus bzw. dehnt sich in Richtung einer Stirnseite 26 des Filtermediums aus, wobei dieses in das Folienmaterial eingeschlossen wird. Durch Aushärten des Folienmaterials entsteht die Folienendscheibe 11.

Eine auf diese Weise gefertigte Filterpatrone 10 ist in Figur 2 dargestellt. In die eine Folienendscheibe ist als Zusatzfilter 27 ein Drahtgitter eingebracht. Die Außenränder des Drahtgitters sind in die Folienendscheibe 11 eingebettet. Auf der gegenüberliegenden Seite der Filterpatrone ist ein Patronendeckel 28 mit seinen Rändern in die Folienendscheibe 11 eingebracht. Dieser Patronendeckel weist zusätzlich eine Zentrierhilfe 29 auf. Diese Zentrierhilfe kann auch mit einem nicht dargestellten Bajonettverschluß kombiniert werden. Das Filtermedium 16 besteht bei diesem Ausführungsbeispiel aus einem sterngefalteten Filterpapier.

Der Figur 3 ist zu entnehmen, wie der Patronendeckel 28 in die Form 12 eingebracht wird. Die Zentrierung erfolgt durch die innere Ringwand 21, wobei das Einsetzen des Patronendeckels 28 durch eine Fase 30 am oberen Ende der inneren Ringwand 21 erleichtert wird. Die Zentrierung des Filtermediums 16 erfolgt nicht durch die Form sondern durch den Patronendeckel 28. Dieser ist zur Ausbildung einer Einsetzhilfe 31 teilweise konisch ausgeführt. Durch diese Gestaltung rutscht das Filtermedium 16 beim Aufsetzen auf den Folienrohling 14 automatisch in die durch den Patronendeckel 28 geschaffene Innenzentrierung 32. Bei dieser Darstellung ist jedoch der zweite Folienrohling 14 nicht gezeigt.

## Patentansprüche

1. Verfahren zur Herstellung von Filterpatronen, insbesondere Rundfilterpatronen (10) mit zumindest einer Folienendscheibe (11 ), bei dem
- ein ringförmig zusammengefügtes Filtermedium (16), insbesondere ein sterngefaltetes Filterpapier, mit zwei in einer Form (12) eingebrachten Folienrohlingen (14) derart in Verbindung gebracht wird, daß eine ringförmige Stirnseite (26) des Filtermediums (16) direkt auf der Oberfläche der Folienendscheibe (11) anliegt,
- das Filtermedium (16) in dieser Position fixiert wird, so daß zwischen diesem und den Folienrohlingen (14) keine Relativbewegung möglich ist,
- die Folienrohlinge (14) erwärmt werden, so daß diese sich hauptsächlich in Richtung der Stirnseite (26) ausdehnen und diese vollständig einschließen und so die Folienendscheibe (11) bilden,
- die Erwärmung beendet wird, sobald die Folienendscheibe (11) genügend ausgehärtet ist,
wobei vor der Erwärmung der Folienrohlinge (14) ein Einlegeteil (13, 15, 27, 28) in die Form eingelegt wird und wobei das Einlegeteil (13, 15, 27, 28) durch die Bildung der Folienendscheibe (11) fest mit der Filterpatrone (10) verbunden wird,
wobei das Einlegeteil vor der Erwärmung der Folienrohlinge in einer hierfür vorgesehenen Aufnahme (17, 23) in der Form (12) fixiert wird, und wobei das Einlegeteil zwischen den beiden Folienrohlingen (14, 14a) eingelegt wird.

2. Verfahren nach Anspruch 1, **dadurch gekennzeichnet, daß** das Einlegeteil (28) nach erfolgter Fixierung in der Form (12) teilweise aus derselben herausragt.

3. Verfahren nach einem der vorherigen Ansprüche, **dadurch gekennzeichnet, daß** das Einsetzen des Filtermediums (16) durch eine in das Einlegeteil (28) integrierte Einsetzhilfe (31), die durch einen konischen Bereich gebildet ist, der mit der Innenkante der Stirnseite des zylindrischen Filtermediums zusammenwirkt, erleichtert wird, wobei das Einlegeteil ein Patronendeckel (28) ist.

4. Verfahren nach einem der vorherigen Ansprüche, **dadurch gekennzeichnet, daß** als Einlegeteil ein im wesentlichen eben ausgeführter Zusatzfilter (27), insbesondere ein Drahtnetz verwendet wird.

5. Verfahren nach einem der vorherigen Ansprüche, **dadurch gekennzeichnet, daß** als Einlegeteil (28) ein Patronendeckel (28), der eine Zentrierhilfe (29) zur Vereinfachung der Montage im zugehörigen Gehäuse der Filterpatrone, aufweist, eingebettet ist,

6. Verfahren nach einem der vorherigen Ansprüche, **dadurch gekennzeichnet, daß** die Folienendscheibe (11) aus zwei aufeinanderliegenden Folienrohlingen (14) gebildet wird, wobei das Einlegeteil (13, 15, 27, 28), insbesondere eine Dichtung (24), zwischen diesen eingebettet wird.

7. Verfahren nach einem der vorherigen Ansprüche, **dadurch gekennzeichnet, daß** vor dem Einlegen.des ersten Folienrohlings (14) ein Griffbügel (13) eingelegt wird und als Einlegeteil zwischen den beiden Folienrohlingen ein Dichtring (15) verwendet wird.

## Claims

1. Method for producing filter cartridges, more especially cylindrical filter cartridges (10) having at least one film end disc (11), where
- a filter medium (16), which is assembled in a ring-shaped manner, more especially a filter paper folded in the shape of a star, is connected to two film blanks (14), which have been inserted in a mould (12), in such a manner that a ring-shaped end face (28) of the filter medium (16) rests directly on the surface of the film end disc (11),
- the filter medium (16) is secured in this position, such that no relative displacement is possible between said filter medium and the film blanks (14).
- the film blanks (14) are heated such that essentially they expand in the direction of the end face (26) and enclose said end face totally and in this way form the film end disc (11),
- the heating is terminated as soon as the film end disc (11) has hardened sufficiently,
an insertion part (13, 15, 27, 28) being inserted into the mould before the heating of the film blanks (14) and the insertion part (13, 15, 27, 28) being fixedly connected to the filter cartridge (10) by means of the forming of the film end disc (11), the insertion part being secured in a receiving means (17, 23) provided for this purpose in the mould (12) before the heating of the film blanks (14) and the insertion part being inserted between the two film blanks (14, 14a).

2. Method according to claim 1, **characterised in that** the insertion part (28), once successfully mounted in the mould (12), protrudes partially out of said mould.

3. Method according to one of the previous claims, **characterised in that** the insertion of the filter medium (16) is facilitated by an insertion aid (31), which is incorporated into the insertion part (28) and is formed by a conical region, which interacts with the inner edge of the end face of the cylindrical filter medium, the insertion part being a cartridge cover (28).

4. Method according to one of the previous claims, **characterised In that** an additional filter (27), which is substantially flat, more especially a wire mesh, is used as the insertion part.

5. Method according to one of the previous claims, **characterised in that** a cartridge cover (28), which includes a centring aid (29) for facilitating the mounting in the associated housing of the filter cartridge, is embedded as the insertion part (28).

6. Method according to one of, the previous claims, **characterised in that** the film end disc (11) is formed from two film blanks (14) situated one above the other, the insertion part (13, 15, 27, 28), more especially a seal (24), being embedded therebetween.

7. Method according to one of the previous claims, **characterised in that** a handle (13) is inserted before the insertion of the first film blank (14) and a sealing ring (15) is used as the insertion part between the two film blanks.

## Revendications

1. Procédé pour fabriquer des cartouches filtrantes, en particulier des cartouches filtrantes rondes (10), comportant au moins une plaque terminale en feuille (11), selon lequel
- un agent filtrant (16) assemblé en anneau, en particulier un papier filtre plié en étoile, est mis en liaison avec deux flans en feuille (14) introduits dans un moule (12) de telle manière qu'un côté frontal (26) annulaire de l'agent filtrant (16) est directement appliqué sur la surface de la plaque terminale en feuille (11),
- l'agent filtrant (16) est fixé dans cette position de sorte qu'aucun mouvement relatif n'est possible entre celui-ci et les flans en feuille ( 14),
- les flans en feuille (14) sont chauffés de sorte que ceux-ci se dilatent principalement en direction du côté frontal (26) et l'entourent entièrement et forment ainsi la plaque terminale en feuille (11),
- on cesse de chauffer dès que la plaque terminale en feuille (11) est suffisamment durcie,
**caractérisée en ce que**
une pièce d'insertion (13, 15, 27, 28) est insérée dans le moule avant de chauffer les flans en feuille (14) et la pièce d'insertion (13, 15, 27, 28) est liée à demeure à la cartouche filtrante (10) par la formation de la plaque terminale en feuille (11), la pièce d'insertion étant fixée dans le moule (12) dans un logement (17, 23) prévu à cet effet avant qu'on chauffe les flans en feuille, en étant insérée entre les deux flans en feuille (14, 14a).

2. Procédé selon la revendication 1,
**caractérisé en ce que**
la pièce d'insertion (28) une fois qu'elle est fixée dans le moule (12) dépasse en partie de celui-ci.

3. Procédé selon l'une des revendications précédentes,
**caractérisé en ce que**
l'introduction de l'agent filtrant (16) est facilitée par un auxiliaire d'introduction qui est intégré à la pièce d'insertion (28) et formé par une zone conique qui agit conjointement avec l'arête intérieure du côté frontal de l'agent filtrant cylindrique, la pièce d'insertion étant un couvercle de cartouche (28).

4. Procédé selon l'une des revendications précédentes,
**caractérisé en ce que**
comme pièce d'insertion on utilise un filtre supplémentaire (27) de conception pratiquement plate, en particulier un treillis en fil métallique.

5. Procédé selon l'une des revendications précédentes,
**caractérisé en ce que**
comme pièce d'insertion (28) on encastre un couvercle de cartouche (28) qui présente un auxiliaire de centrage (29) destiné à faciliter le montage dans le boîtier correspondant de la cartouche filtrante.

6. Procédé selon l'une des revendications précédentes,
**caractérisé en ce que**
la plaque terminale en feuille (11) est formée de deux flans en feuille (14) superposés, la pièce d'insertion (13, 15, 27, 28), en particulier un joint (24), étant encastrée entre ceux-ci.

7. Procédé selon l'une des revendications précédentes,
**caractérisé en ce que**
avant d'insérer le premier flan en feuille (14), on insère étrier de manipulation (13) et on utilise une bague d'étanchéité (15) en tant que pièce d'insertion entre les deux flans en feuille.
